# EUROPÄISCHE PATENTSCHRIFT

(11) **EP 2 271 418 B1**
(45) Veröffentlichungstag und Bekanntmachung des Hinweises auf die Patenterteilung: **25.01.2012**
(21) Anmeldenummer: 08758334.0
(22) Anmeldetag: 08.04.2008
(51) Int. Cl.: B01D 63/00, B01D 65/00, B29C 53/58, B29C 70/68, F16L 9/128

(54) **MODULARE MEMBRANGEHÄUSEELEMENTE UND VERFAHREN ZU DEREN HERSTELLUNG**
MODULAR MEMBRANE HOUSING ELEMENTS AND METHOD FOR THE PRODUCTION THEREOF
ÉLÉMENTS DE BOÎTIER À MEMBRANE ET LEUR PROCÉDÉ DE PRODUCTION

(43) Veröffentlichungstag der Anmeldung: 12.01.2011
(73) Patentinhaber: Knappe, Holger, 26780 Malataverne (FR); Knappe, Nils, 26780 Malataverne (FR)
(72) Erfinder: KNAPPE, Nils, F-26780 Malataverne (FR)
(74) Vertreter: Kossak, Sabine
(86) Internationale Anmeldenummer: PCT/EP2008/002772
(87) Internationale Veröffentlichungsnummer: WO 2009/124559

(56) Entgegenhaltungen:
- EP-A- 0 104 958
- DE-A1- 3 639 932
- DE-U1- 20 316 956
- US-A- 3 654 967

## Beschreibung

Gegenstand der Erfindung sind Membrangehäuseelemente, die aufgebaut sind aus einem Innenelement, einer Faserumwicklung und einer Ummantlung und ein Verfahren zu deren Herstellung.

Die Trinkwassergewinnung und Wasseraufbereitung gewinnen zunehmend an Bedeutung. Für die Trinkwassergewinnung durch Meerwasserentsalzung und die Aufbereitung von Brackwasser wird meist die Umkehrosmose, auch als reverse Osmose bezeichnet, oder Nano- und Ultrafiltration eingesetzt. Zur Durchführung der Osmose oder auch zur Filtration von Wasser oder anderen Flüssigkeiten werden vielfach Membranen in Form von Membranelementen eingesetzt. Üblicherweise finden dabei Spiralmembranen Verwendung, bei denen die Membranfolie um das Permeatrohr gewickelt ist. Diese gewickelten Membranelemente werden in ein druckfestes Gehäuse eingesetzt, das den üblichen Betriebsdrücken standhält, die in der Größenordnung von 16 bis 100 bar liegen. Übliche Membrangehäuse, wie sie in Meerwasser- oder Brackwasser-Entsalzungsanlagen eingesetzt werden, nehmen mehrere in Reihen angeordnete, miteinander verbundenen Membranelemente auf. Die Membrangehäuse für die Umkehrosmose weisen dabei Längen von beispielsweise 1 bis 7 m auf und haben Durchmesser, die zur Aufnahme von 2,5 , 4, 8 und 16 Inch Membranelementen geeignet sind. Besonderes in der Nano- und Ultrafiltration variieren die Größen abhängig vom jeweiligen Einsatzgebiet. Ein Membranelement, wie es für die Umkehrosmose verwendet werden kann, ist beispielsweise aus der EP 0 601 301 B1 oder aus der DE 203 16 956 U1 bekannt.

An die Membrangehäuse, in die die Membranelemente eingebracht sind, werden durch die Druckbelastung hohe Anforderungen gestellt. Anders als z.B. Druckrohre müssen Membrangehäuse höhere Kräfte aufnehmen, da der Betriebsdruck z.B. für das Umkehrosmoseverfahren 16 bis 84 bar beträgt. Zudem muss der Zylinder des Membrangehäuses die Kräfte der verschlossenen Kopfenden aufnehmen, die besonders an den Endbereichen den radialen Druck überlagern. Die Membrangehäuse müssen im Unterschied zu den Druckrohren auch eine hohe Präzision aufweisen, damit die Membranelemente in das Membrangehäuse eingeschoben werden können. Für Membrangehäuse bestehen daher wesentlich geringere Fertigungstoleranzen und die Gehäuse müssen an jeder Stelle entlang der Achse einen nahezu kreisförmigen Querschnitt und denselben Durchmesser aufweisen. Um diese hohe Präzision zu erreichen, werden Membrangehäuse bisher weitestgehend manuell gefertigt über kalibrierte Stahldorne oder unter Einsatz kalibrierter Innenliner.

Ein entsprechendes Verfahren ist beispielsweise aus der EP 0 442 457 B1 bekannt. Das dort beschriebene Verfahren läuft beispielsweise wie folgt ab:
a. Die vorgefertigten Innenlinerrohre werden auf die gewünschte Länge zugesägt und auf einen Stützdorn montiert.
b. Die zugesägten Elemente werden dann auf eine Maschine eingespannt, die die Innenliner gleichmäßig dreht. Manuell wird eine mit Polyamid getränkte Glasfaser auf das Rohr aufgebracht, während dieses sich maschinell dreht. Dieses dreht sich dann solange bei Bewegung eines hin- und herfahrenden Schlittens, bis mehrere komplett deckende Schichten aufgebaut sind. Die glasfaserhaltige Masse wird auf dem Innenliner ausgehärtet. Die Härtung wird über mehrere Stunden unter Rotation entweder durch UV-Licht oder in einem Ofen bewerkstelligt. Bei den ausgehärteten Membrangehäusen werden die Enden besäumt und geschliffen.
c. Optional wird in einem weiteren Schritt die Polyamidmasse mit einer UVhärtenden Polymermasse überzogen, um eine optisch ansprechende Ummantelung zu erreichen.

Dieses Verfahren führt zwar zu Membrangehäuseelementen, die über die gesamte Membrangehäuselänge einen fast identischen Durchmesser aufweisen und keine Ovalitäten zeigen, dafür können über dieses Verfahren Membrangehäuse nur in einer vergleichsweise geringen Stückzahl pro Tag hergestellt werden. Da das Verfahren mehrere Schritte aufweist, die in Handarbeit ausgeführt werden müssen, ist es zudem vergleichsweise kostenintensiv. Die vielen Arbeitsschritte beinhalten viel manuelle Arbeit und sind auch aufgrund des umständlichen Handlings der schweren und sperrigen Teile sehr zeitintensiv. Zudem beanspruchen die einzelnen Arbeitsstationen viel Platz für den Transport und die Lagerung der Teile.

Vergleichbare Nachteile weist das Verfahren gemäß DE 3639932 A1 auf. In dieser Schrift ist die Herstellung eines Membranmoduls aus einem Druckrohr mit einer dünnwandigen Hülle aus einem glasfaserverstärkten Kunststoff beschrieben, der an seinen Enden mit Anschlusskörpern versehen ist.

Zur Herstellung dieses Membranmoduls werden ringförmige Einlegeteile zur druckdichten Aufnahme der Anschlusskörper vorgeformt. Die Einlegeteile werden auf einen Wickeldorn aufgeschoben und in einem Abstand zueinander fixiert, die der gewünschten Länge des Druckrohres entspricht. Anschließend wird ein Glasfaserstrang/-band spiralig und mehrlagig aufgewickelt.

Bei der Herstellung der entsprechenden Membrangehäuse muss zudem beachtet werden, dass das innenliegende Rohr, das mit dem entsalzten Wasser in Berührung kommt, keine gesundheitlich bedenklichen Stoffe enthält, die aus dem Rohr ausgewaschen werden könnten. Zudem darf das gesamte Gehäuse kein Licht und keine UV-Strahlung durchlassen, da diese ggf. das Wachstum von Algen oder Bakterien anregen würde.

Die bisherigen Herstellungsverfahren erfordern es zudem, dass die rohrförmigen Membrangehäuse abhängig vom Einsatzzweck und Einsatzort in verschiedenen Längen und Durchmessern angefertigt werden. Entsprechend müssen im Lagerbestand viele verschiedene Typen und Größen von Membrangehäusen und rohrfömigen Membrangehäuseelementen vorrätig sein, die für verschiedene Druckstufen, Längen und Durchmesser ausgelegt sind.

Einfache Druckrohre werden beispielsweise für Gaspipelines oder Wasserleitungen verwendet und daher in die Erde eingegraben. Entsprechend werden nur geringe Ansprüche an die optische Oberflächenbeschaffenheit gestellt. Im Gegensatz hierzu werden bei Membrangehäusen hohe Anforderungen an die optische Qualität gestellt. Die Oberfläche muss glatt und möglichst eben sein und eine optisch ansprechende Aufmachung zeigen. Deshalb ist bei Membrangehäusen anders als bei Druckohren eine optisch hochwertige Ummantelung notwendig.

Aus der EP 0 104 958 A1 ist ein druckfestes Gehäuse für Membrananwendungen aus einem Liner und mehreren Schichten von mit Harz getränktem Fasermaterial bekannt, bei dem sich die Faserlagen überkreuzen. Eine solche Anordnung der Fasern ermöglicht kein optimales Abfangen der bei der Druckbelastung entstehenden Kräfte.

Aufgabe der Erfindung ist es, ein Membrangehäuseelement bereitzustellen, das sich kostengünstig herstellen lässt und gleichzeitig eine hohe Präzision und ansprechende äußere Oberfläche aufweist. Das Membrangehäuseelement soll zudem kein Licht und keine UV-Strahlung durchlassen und eine licht- und wetterbeständige Außenhaut aufweisen und im Inneren aus einem gesundheitlich unbedenklichen Material für den Lebensmittel- bzw. Trinkwasserbereich bestehen. Der Aufbau des Membrangehäuses soll es ermöglichen, mit einer geringen Anzahl von Komponenten verschiedenste Membrangehäusevarianten zu realisieren. Die Membrangehäuseelemente sollen sich weiterhin in einfacher Weise in ein Membrangehäuse einbauen lassen bei gleichzeitig druckfester Abdichtung der Kopfenden und Aufnahme der bei Druckbelastung entstehenden radialen und axialen Kräfte.

Aufgabe der Erfindung ist es weiterhin, ein Verfahren bereitzustellen, mit dem kostengünstig größere Mengen der Membrangehäuseelemente in höchster Gleichmäßigkeit hergestellt werden, die die für Membrangehäuse notwendige sehr hohe Präzision aufweisen.

Die Aufgabe wird erfindungsgemäß gelöst durch ein zylindrisches Membrangehäuseelement, das aufgebaut ist aus einem Innenelement aus Kunststoff, einer Faserumwicklung (faserverstärkte Schicht) und einer Ummantelung, dadurch gekennzeichnet, dass
- auf dem Innenelement eine weitestgehend radiale Umwicklung aus Fasern, als faserverstärkte Schicht, aufgebracht ist und
- auf der faserverstärkten Schicht die Ummantlung aufgebracht ist, die mindestens zwei Zugelemente enthält.

Weitere Ausführungsformen sind Gegenstand der Unteransprüche oder nachfolgend beschrieben.

Erfindungsgemäß werden als Fasern (Verstärkungsfasern) für die faserverstärkte Schicht Mineralfasern, wie z.B. Glasfasern, Basaltfasern, Textilfasem oder Kunststofffasern, wie z.B. Kevlarfasern, Carbonfasern, Polymerfasern oder hochvemetzte oder beschichtete Kunststofffasern eingesetzt. Die faserverstärkte Schicht bedeckt bevorzugt die gesamte Oberfläche des Innenelements, d.h. die radiale Wicklung ist flächendeckend aufgebracht.

Das Innenelement ist bevorzugt ein Innenliner oder inneres Hohlprofil. Besonders bevorzugt ist der Innenliner extrudiert, d.h. aus einem Kunststoff im Extrusionsverfahren hergestellt. Das innere Hohlprofil ist bevorzugt im Pultrusionsverfahren hergestellt. Das Pultrusionsverfahren ist wie das Extrusionsverfahren ein kontinuierlicher Herstellungsprozess. Bei diesem werden die Fasern zunächst durch ein Bad mit einem härtbaren Polymer, vorzugsweise einem duroplastischen Polymer, wie Epoxyharze oder Polyester, gezogen und dann beim Durchziehen durch ein beheiztes Werkzeug oder durch UV-Härtung ausgehärtet. Ein pultrudiertes Hohlprofil für die erfindungsgemäßen Membrangehäuseelemente ist beispielweise aus den gleichen Fasern wie die faserverstärkte Schicht aufgebaut, wobei die Fasern im inneren Hohlprofil längs der Gehäuseelementachse verlaufen. Erfindungsgemäß können auch andere mit herkömmlichen Verfahren hergestellte Innenelemente verwendet werden, wobei diese weniger bevorzugt sind.

Bevorzugt ist das zylindrische Membrangehäuseelement aufgebaut aus
- einem Innenliner, der extrudiert ist, d.h. aus einem Kunststoff im Extrusionsverfahren hergestellt ist,
- einer Faserumwicklung mit einer thermoplastischen Matrix auf dem Innenliner, die beispielsweise eine glasfaserverstärkte Schicht mit Polypropylenbeschichtung ist, und als weitestgehend radiale Umwicklung aus Fasern, z.B. Glasfasernbänder, mit thermoplastischer Matrix zusammengehalten wird, und
- eine Ummantelung auf der faserverstärkten Schicht, die im Extrusionsverfahren aufgebracht ist und die mindestens zwei Zugelemente enthält und
- an die Enden des Gehäuses angebrachte Kopfenden oder flanschartige Gebilde zur Aufnahme eines Endplattensystems.

In einer Ausführungsform enthält die Ummantelung Hohlkörper in Form von Rohrprofilen/Hohlprofilen, die zur Einbringung der axialen Zugelemente dienen. Die Rohrprofile dienen auch zum Schutz der Zugelemente vor Umwelteinflüssen. Vorzugsweise sind die Hohlprofile zur Aufnahme der Zugelemente zwischen der mineralfaserverstärkten Schicht und der Ummantelung eingeschlossen. In einer weiteren Ausführungsform werden Zugelemente aus Mineral- oder Kunststofffasem im Herstellungsprozess der Ummantelung mit eingebracht.

Die Oberschicht, die zur Ummantlung der erfindungsgemäßen Membrangehäuseelemente aufgetragen wird, besteht vorzugsweise aus einem Acrylnitril-Butadien-Styrol-Kautschuk (ABS). Die Ummantlung sorgt für eine optisch ansprechende gleichmäßige Oberfläche, um dem Membrangehäuse ein optimales Aussehen zu verleihen und sorgt für eine gute UV-Beständigkeit. Das Membrangehäuse wird hierdurch licht- und UV-undurchlässig. Die Ummantelung kann außer aus ABS auch aus anderen Thermoplasten hergestellt sein. Die Ummantlung ist vorzugsweise eine durchgängige Kunststoffschicht mit einer Schichtdicke zwischen 2 und 4 mm .

Die Zugelemente in den erfindungsgemäßen Membrangehäuseelementen sind bevorzugt Zugstangen oder Zugseile. Die Zugstangen oder Zugseile sind vorzugsweise aus Stahl, Edelstahl oder einem Verbundwerkstoff bestehend aus einer Faser mit thermo- oder duroplastischer Matrix. In einer bevorzugten Ausführungsform werden in den erfindungsgemäßen Membrangehäusen vier Zugelemente verwendet, die besonders bevorzugt zu einer gleichmäßigen Kraftverteilung in jeweils gleichem Abstand, parallel zueinander angeordnet sind. Um eine gleichmäßige Ummantelung zu gewährleisten, werden bevorzugt für die Einbringung der Zugelemente in die Ummantelung während des Ummantelungsprozesses Hohlprofile eingezogen, in denen die Zugelemente gelagert werden. Die Hohlprofile zur Aufnahme der Zugelemente werden zwischen faserverstärkter Schicht und Ummantlung eingeschlossen. Sie können beispielweise aus extrudiertem Kunststoff bestehen. In einer Ausführung wird die Ummantelung durch ein Profil ersetzt, welches bereits die Profile zur Einbringung der Zugelemente enthält, und direkt während des kontinuierlichen Teils des Herstellungsverfahrens formgebend auf die mineralfaserverstärkte Schicht "aufextrudiert" wird.

Unter zylindrischen (rohrförmigen) Membrangehäuseelementen werden erfindungsgemäß rohrförmige Gebilde verstanden, die hochdruckresistent sind und z.B. Membranen zur Filtration oder Osmose enthalten.

Das erfindungsgemäße, zylindrische Membrangehäuseelement wird vorzugsweise in einem Verfahren hergestellt, das zumindest folgende Schritte umfasst:
1. Ein Innenliner, vorzugsweise aus PP ohne Glasfaseranteil, wird kontinuierlich im Extrusionsverfahren hergestellt und abgekühlt,
2. der abgekühlte Liner wird immer noch in der Extrusionsstrasse befindlich so erhitzt, dass die Oberfläche aufgeschmolzen wird,
3. die aufgeschmolzene Oberfläche des Liners wird ausschließlich radial mit einer Glasfaser umwickelt.
4. Nach dem kontinuierlichen Prozess wird auf die Glasfaserschicht eine Oberschicht zur Ummantelung aufgetragen und
5. in die Ummantelung werden dabei mindestens zwei, vorzugsweise vier Zugstangen eingelagert, die die axiale Kraft aufnehmen.

Die Herstellung erfolgt beispielsweise über folgende Schritte:
1. ein Innenliner, vorzugsweise aus Polypropylen-Homopolymer mit kleiner Viskosität (MFR 0,25g/10min) wird kontinuierlich im Extrusionsverfahren hergestellt und abgekühlt,
2. der abgekühlte Liner wird immer noch in der Extrusionsstrasse befindlich so erhitzt, dass nur die Oberfläche aufgeschmolzen wird,
3. die aufgeschmolzene Oberfläche des Liners wird vorwiegend radial mit einer Glasfaser mit oder ohne thermoplastischer Matrix umwickelt, wobei sich die Faser mit der Schmelze an der Lineroberfläche verkrallt,
4. nach dem kontinuierlichen Prozess wird auf die Faserschicht eine Oberschicht zur Ummantlung aufgetragen und
5. in die Ummantlung oder das Ummantelungsprofil werden dabei mindestens zwei, vorzugsweise vier Hohlprofile für Zugelemente, welche zur Aufnahme der axialen Kraft dienen sollen, eingelagert.

Das so hergestellte zylindrische Membrangehäuseelement kann dann auf beliebige Längen zugeschnitten werden.

An dem erfindungsgemäßen zylindrischen Membrangehäuseelement werden später die Rohrköpfe, d.h. die Endstücke mit den Zugelementen montiert.

In einer Ausführungsform der Erfindung werden als Innenliner dünnwandige Rohre verwendet, wie sie in der EP 0 442 457 B1 beschrieben sind. Die Innenliner in den erfindungsgemäßen zylindrischen Membrangehäuseelementen bzw. die Innenliner, die im erfindungsgemäßen Verfahren hergestellt werden, bestehen vorzugsweise aus Polyethylen (PE), Polypropylen(PP), Polyvinylchlorid (PVC), Polyphenylenoxid (PPO), polyamidmodifiziertem Polyphenylenoxiden, einem polystyrolmodifizierten Polyphenylenoxid, ABS oder Polyvinylidenfluorid-Polymeren (PVDF) oder anderen Thermoplasten.

Die Aufgabe der Erfindung wird weiterhin gelöst durch ein Verfahren zur Herstellung eines zylindrischen Membrangehäuseelementes, das zumindest folgende Schritte umfasst:
1. Die kontinuierliche Herstellung eines radial mit Fasern umwickelten Innenliners, wobei bei der Herstellung des umwickelten Innenliners bevorzugt folgende Schritte ablaufen:
   a. Der Innenliner wird durch kontinuierliche Extrusion auf einer Extrusionsstrecke hergestellt,
   b. anschließend wird der Innenliner kontinuierlich abgekühlt,
   c. die gerade abgekühlte Oberfläche des Innenliners wird erneut so aufgeheizt, dass sie aufschmilzt und vorzugsweise gleichzeitig der Innenliner im wesentlichen radial mit Fasern, bevorzugt Glasfaser, vorzugsweise Glasfaserrovings oder -bändern, die mit einer PP-Matrix zusammengehalten werden, flächendeckend umwickelt wird und sich mit dem Innenlinermaterial verbinden, und
   d. anschließend unter die Erweichungstemperatur des Innenliners abgekühlt wird,
2. eine Ummantelung oder ein Ummantelungsprofil aufgetragen wird, auf den mit Fasern umwickelten Innenliner, wobei die Ummantelung mindestens zwei eingelagerte Zugelemente oder Hohlprofile zur Aufnahme der Zugelemente aufweist.

Die Fasern verbinden sich in Schritt 1. c. mit der Oberfläche des Innenliners durch Schmelzverbindung des Linermaterials mit den Fasern oder durch Schmelzverbindung des Linermaterials durch die thermoplastische Tränkung des Rovings.

Die Ummantelung oder Herstellung des Ummantlungsprofils erfolgt dabei bevorzugt in derselben Strecke, in der die Innenlinerextrusion und die Umwicklung vorgenommen werden, ebenfalls im kontinuierlichen Herstellungsprozess. Die Zugelemente, die über die Membrangehäuseendköpfe verbunden werden, werden dann durch die in der Ummantelung geformten Hohlprofile gesteckt, sofern sie nicht direkt bei der Herstellung des Membrangehäuses eingebracht werden. Wenn als Zugelemente Stahlstangen verwendet werden, so werden die Enden der Hohlprofile so versiegelt, dass keine Korrosion entstehen kann.

In einer weniger bevorzugten Ausführungsform des Verfahrens werden die zylindrischen Membrangehäuseelemente nach Durchlaufen des kontinuierlichen Verfahrens gemäß Schritt 1. in Stücke endlicher Länge zerschnitten, bevor die Ummantlung aufgebracht wird.

Besonders bevorzugt werden die rohrförmigen Membrangehäuseelemente in Stücke von 1 bis 12 m Länge, bevorzugt 12 m Länge geschnitten. In einer Ausführungsform werden dabei die Zugelemente, insbesondere als Faserbündel, zwischen die faserverstärkte Schicht und die Ummantelung eingebracht. In einer weiteren Ausführung können die Hohlprofile zur Aufnahme der Zugelemente direkt auf die faserverstärkte Schicht extrudiert werden.

Die aufgeschmolzene Oberfläche des Liners wird radial mit einer Faser umwickelt. Die Faser ist bevorzugt eine Glasfaser, die zu mit Polypropylen verklebten Bändern vorkonfektioniert ist, wobei eine Aufheizung auf 230°C erfolgt. Das Besondere des Verfahrens ist, dass die Umwicklung mit den Fasern weitestgehend radial erfolgt und hierdurch eine hohe Festigkeit in radialer Richtung erreicht wird, ohne wie bei herkömmlichen Membrangehäusen üblich eine erheblich aufwendigere, kostenintensivere und materialaufwendigere Anzahl von Kreuzlagen auftragen zu müssen.

Die für die erfindungsgemäßen zylindrischen Membrangehäuseelemente verwendeten bzw. die im erfindungsgemäßen Verfahren verwendeten Fasern sind bevorzugt Glasfasern oder Glasfaserrovings, besonders bevorzugt mit Thermoplasten verklebte Glasfaserrovings, die zu Glasfaserbändern konfektioniert werden. Die Glasfaserschicht dieser Mineralfasern besteht aus Glasfaserrovings, die, vorzugsweise mittels einer thermoplastischen "Verklebung" zu Bändern vorkonfektioniert, vorgetränkt sind. Der Thermoplast besteht vorzugsweise aus einem Material, welches eine thermische Klebverbindung mit dem für die Verwendung des Innenliners und der Ummantelung gewählten Materials besteht.

Die Kraft in einem Druckrohr wirkt im Durchmesser, d.h. in radialer Richtung, doppelt so stark wie in axialer Richtung. Deshalb wirkt die größte Kraft auf die Radialwicklung des Membrangehäuses. Die Mineralfasern werden in der Radialwicklung bei Innendruck auf Zug belastet. Gewöhnliche E-Glas Fasern weisen bereits 5-6 mal höhere Zugfestigkeiten als gewöhnlicher Stahl auf, weshalb durch die radiale Wicklung eine hohe Zugbelastung gewährleistet ist. Gerade unter Berücksichtigung von Membrangehäusen für die Seewasserentsalzung mit einem typischen Betriebsdruck von 84bar und einem Sicherheitsfaktors von 6 hat das erfindungsgemäße Membrangehäuse gravierende Vorteile gegenüber herkömmlichen Gehäusen mit Kreuzwicklung, da hier auch bei der vergleichsweise geringeren Wicklungsstärke die erforderlichen Druckbelastungen erreicht werden.

Aufgrund der in die erfindungsgemäßen Membrangehäuseelemente eingebrachten Membran- bzw. Filterelemente müssen diese im Innendurchmesser hochpräzise sein und haben nur geringe Toleranzen von max. +/- 0,2 auf Innendurchmesser von 202mm bezogen bzw. +/-0,3mm auf Innendurchmesser von 406mm. Zudem sind bei den erfindungsgemäß hergestellten Membrangehäuseelementen keine Ovalitäten zulässig, da dieses zu erheblichen Problemen beim Ein- und Ausschieben der Membranen/Filter führen würden. Um diese Präzision und Gleichmäßigkeit zu erreichen, wird der Extruder bei der Herstellung eines 8 Inch großen Innenliners mit einem Vorschub von 0,5m-1 m pro Minute geführt. Dieser Vorschub ermöglicht es, auf kurzer Strecke Verweilzeit und Druck der Schmelze, deren Abkühlung, den Abzug und besonders die Kalibrierung des Liners so stressfrei zu gestalten, dass beim anschließenden Aufschmelzen der Oberfläche und der Umwicklung mit Fasern sich das Membrangehäuseelement nicht mehr verformt. Bevorzugt wird die Oberfläche des Innenliners nur in geringe Tiefe aufgeschmolzen. Im Gegensatz dazu betragen die Liniengeschwindigkeiten bei den üblichen Rohren beispielsweise 5 m und mehr pro Minute.

Mit den herkömmlichen, manuellen Verfahren werden üblicherweise etwa 25 Membrangehäuseelemente mit einer Länge von 6m am Tag (24h) hergestellt, abhängig von der Druckstufe, bei der das Gehäuse verwendet werden soll. Im Vergleich hierzu erlaubt der Einsatz des erfindungsgemäßen Verfahrens überraschenderweise die Herstellung von etwa 120 und 250 Membrangehäuseelementen am Tag bei gleichbleibender Qualität und Präzision.

Weiterhin ist Gegenstand der Erfindung ein Sideport-Membrangehäuseelement, das aufgebaut ist aus einem Innenelement z.B. einem Innenliner, der mit Fasern, bevorzugt Glasfasern umwickelt ist und einer Spritzgussummantelung, wobei das Sideportelement Öffnungen zur Aufnahme des Sideports aufweist, die zur seitlichen Ab- und Anströmung von Flüssigkeiten und zur Montage von Anschlussports dienen, dadurch gekennzeichnet, dass
- der Innenliner ein Kunststoffelement ist, das ausschließlich radial mit Fasern umwickelt ist, vorzugsweise Glasfaserrovings, wie sie im Vorhergehenden beschrieben sind und
- zwischen Spritzgussummantelung und faserverstärkter Schicht mindestens zwei Zugelemente eingebracht sind,
wobei bevorzugt die Faser Glasfaser ist und/oder der Innenliner as PE, PP, PVC, PPO, polyamidmodifiziertem Polyphenyloxid, polystyrolmodifiziertem Polyphenyloxid, ABS, PVDF oder anderen Thermoplasten besteht.

Das erfindungsgemäße Sideportelement ist entweder in einem separaten Rohrkopf/Flansch integriert oder als ein separates Element ausgebildet. Bei klassischen Membrangehäusen werden für seitliche Einspeisungen Ausbrüche in die dafür vorher verstärkte Gehäusewand gebohrt. Das erfindungsgemäße Sideportelement ermöglicht daher einen flexibleren Einsatz ohne entsprechende Verstärkung der Membrangehäuse.

Das erfindungsgemäße Sideport-Membrangehäuseelement entspricht in seinem Aufbau im Wesentlichen dem efindungsgemäßen zylindrischen Membrangehäuseelement. Während jedoch das zylindrische Membrangehäuseelement ausschließlich zur Aufnahme der Membranelemente dient, ermöglicht das Sideportelement das Anströmen der Membranelemente bzw. Filter in radialer Richtung bzw. die seitliche Ab- oder Anströmung von Flüssigkeiten und die Montage von Anschlussports. Die einzelnen Bauteile des Sideport-Membrangehäuseelementes, nämlich Innenliner, mineralfaserverstärkte Schicht und Spritzgussummantlung, entsprechen im Wesentlichen dem bei den zylindrischen Membrangehäuseelementen beschriebenen.

Das erfindungsgemäße Sideport-Membrangehäuseelement wird bevorzugt in einem Verfahren mit folgenden Schritten hergestellt:
- Fertigung des Innenliners im Spritzgussverfahren,
- radiale Umwicklung des Innenliners mit Mineralfasern und
- Fertigung einer Ummantelung über der mineralfaserverstärkten Schicht im Spritzgussverfahren.

Die erfindungsgemäßen Membrangehäuseelemente und Sideportelemente lassen sich zu einem Membrangehäuse verbauen. Ein modulares Membrangehäuse, in das die Membran eingebracht wird, besteht zumindest aus folgenden Membrangehäuseelementen:
- einem oder mehreren erfindungsgemäße zylindrischen Membrangehäuseelementen,
- ggf. einem oder mehreren erfindungsgemäßen SideportMembrangehäuseelementen,
- ggf. Anschlussfittingen für die seitliche Anströmung und Entnahme, Kugelhahnelemente und Fittings,
- zwei Membrangehäusendköpfen/Flanschen zur Befestigung der Zugelemente und
- mindestens zwei Endkappenassemblys (selbstdichtend).

Vorteilhafterweise erlaubt die Verwendung der erfindungsgemäßen Membrangehäuseelemente den Aufbau eines Membrangehäuses als ein modulares System. Das erfindungsgemäße Herstellungsverfahren ermöglicht es wirtschaftlich günstig, Membrangehäuseelemente für zwei Druckstufen, nämlich Gehäuse bis beispielsweise 31 bar und Gehäuse bis 84 bar, herzustellen. Da sich die zylindrische Membrangehäuseelemente individuell auf verschiedene Längen zusägen lassen, ist es nicht mehr notwendig, Membrangehäuseelemente in verschiedensten Druckstufen und Längen zu lagern, sondern es ist ausreichend, Rohre in einer Maximallänge von 7 m in zwei Druckstufen zu lagen. Zudem sind zur Herstellung des gesamten Membrangehäuses in der einfachsten Ausführung nur noch die Anschlussfittinge und die Endkappenassemblies notwendig, die für beide Systeme gleich sind. Hierdurch müssen deutlich weniger verschiedenen Teile gelagert werden und der Lagerbestand kann drastisch verringert werden.

Die erfindungsgemäßen Membrangehäuseelemente und die mit dem erfindungsgemäßen Verfahren hergestellten Membrangehäuseelemente haben den Vorteil, dass durch die radiale Umwicklung die Schichtdicke des zylindrischen, rohrförmigen Elements variierbar ist. Die radiale Wicklung führt gleichzeitig zu einer hohen Festigkeit und Stabilität, da in allen Bereichen des Membrangehäuseelements eine gleichmäßige Faserschicht sichergestellt ist. Durch die radiale Umwicklung kann das Membrangehäuse selbst die gesamte radiale Kraft tragen. Die Aufnahme der axialen Kraft erfolgt über die in der Ummantelung befindlichen Zugelemente.

Die erfindungsgemäßen Membrangehäuse werden vorzugsweise für die Einsatzgebiete Nanofiltration, Ultrafiltration, Ionenaustausch und reverse Osmose/Umkehrosmose verwendet. Für die Filtrationsverfahren oder die Umkehrosmose werden die Membrangehäuse mit Membranelementen befüllt. Wenn die Membrangehäuseendköpfe/Flansche durch gespritzte Böden ersetzt werden, ist es möglich, Tanks oder Behälter unter Verwendung der erfindungsgemäßen Membrangehäuseelemente zu realisieren. Diese werden für den Ionentausch mit geeigneten Ionentauschern, z.B. Ionentauscherharzen, befüllt.

Die Erfindung wird anhand der folgenden Figuren beispielhaft erläutert. Es zeigen
- Fig. 1: eine Explosionszeichnung eines erfindungsgemäßen Membrangehäuses,
- Fig. 2: eine Aufsicht auf die Querseite des Membrangehäuse aus Fig. 1 im Bereich des Flansches und
- Fig. 3 a, b: Längsschnitte durch das Membrangehäuse aus Fig. 1.

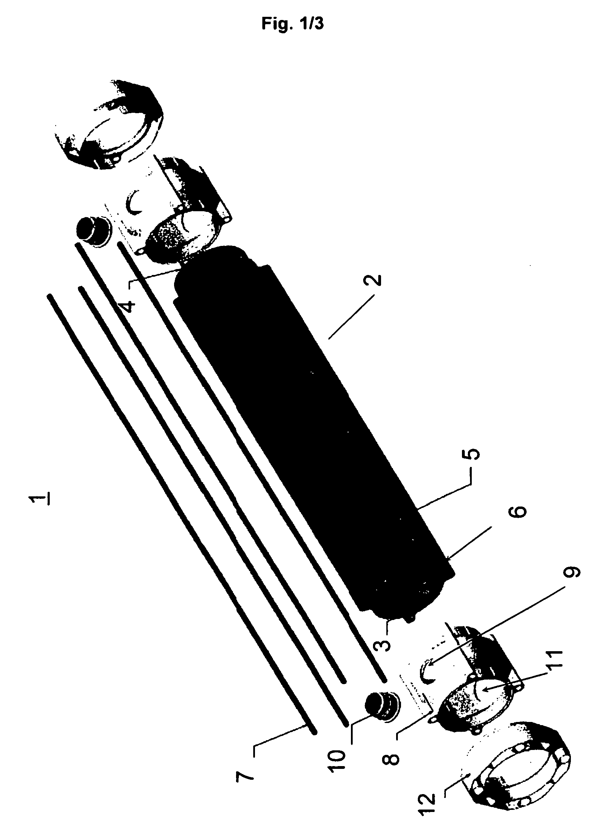

Das zentrale Element des erfindungsgemäßen Membrangehäuses 1 ist, wie in Figur 1 zu erkennen ist, das zylindrische Membrangehäuseelement 2. Dieses weist als innerste Schicht einen Innenliner 3 und eine darumliegende faserverstärkte Schicht 4 auf. Um die faserverstärkte Schicht ist die Ummantelung 5 gelegt. In der Ummantelung 5 sind an den vier Ecken Hohlprofile 6 zu erkennen. Diese dienen zur Aufnahme der Zugstangen 7. An beiden Enden des Membrangehäuseelments 2 sind Sideportelemente 8 gezeigt. In den Sideportelementen befinden sich Öffnungen 9 zur Aufnahme der Sideports 10. Neben den Öffnungen gibt es über den Umfang der Sideportelmente 8 verteilt Einkerbungen 11, die aufgebohrt werden können und zur Aufnahme weiterer Sideports dienen. Das Membrangehäuse 1 ist ferner mit zwei Flanschen/Membrangehäusendköpfen 12 versehen, an denen die vier Zugstangen 7 befestigt werden. Die Endkappen zum Abschluss der Membrangehäuse sind hier nicht dargestellt.

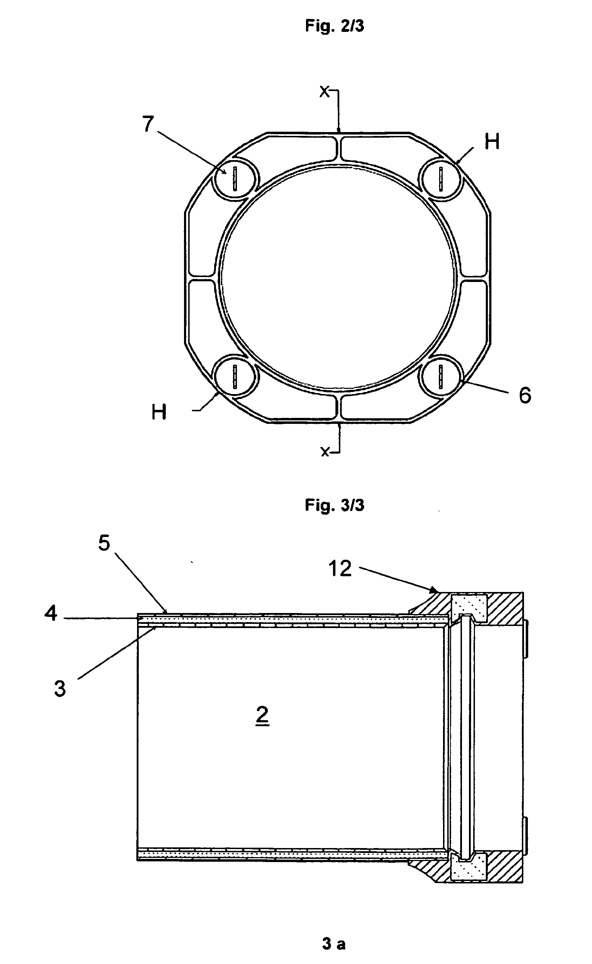

In Figur 2 ist eine Aufsicht auf die Seite des Membrangehäuse 1 im Bereich des Flansches 12 gezeigt. Die vier Zugstangen 7 liegen jeweils in den Hohlräumen der Hohlprofile 6.

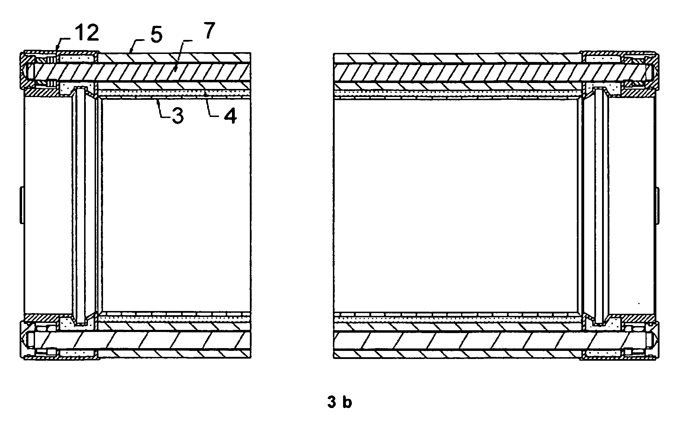

Figur 3a zeigt einen Längsschnitt durch das Membrangehäuse entlang der Achse X-X, wie in Figur 2 angezeichnet. Im mittleren Bereich befindet sich das zylindrische Membrangehäuseelement 2, aufgebaut aus Innenliner 3, faserverstärkter Schicht 4 und Ummantelung 5. Im Außenbereich schließt das Membrangehäuseelement mit dem Flansch 12 ab. Ein weiterer Längsschnitt durch das Membrangehäuse entlang der Achse H-H ist In Flg 3 b gezeigt. Oberhalb des Innenliners 3 und der faserverstärkten Schicht 4 befindet sich hier die Ummantelung 5 mit den Hohlprofilen 6. Die Zugstangen 7, die in den Hohlprofilen 6 verlaufen, sind im Flansch 12 befestigt, um die Aufnahme der axialen Zugkraft durch die Zugstangen zu ermöglichen.

### Bezugszeichenliste

- 1: Membrangehäuse
- 2: zylindrische Membrangehäuseelement
- 3: Innenliner
- 4: faserverstärkte Schicht
- 5: Ummantelung
- 6: Hohlprofile
- 7: Zugstangen
- 8: Sideportelemente
- 9: Öffnungen
- 10: Sideports
- 11: Einkerbungen
- 12: Ftansche/Membrangehäuseendköpfe

## Patentansprüche

1. Zylindrisches Membrangehäuseelement (2), das aufgebaut ist aus einem Innenelement (3), einer Faserumwicklung und einer Ummantelung (5), **dadurch gekennzeichnet, dass**
- auf dem Innenelement (3) radiale Umwicklung aus Fasern aufgebracht ist und
- auf der Faserschicht (4) die Ummantelung (5) aufgebracht ist, die mindestens zwei axiale Zugelemente (7) enthält.

2. Membrangehäuseelement (2) gemäß Anspruch 1, **dadurch gekennzeichnet, dass** als Fasern für die faserverstärkte Schicht Mineralfasern, Textilfasern oder Kunststofffasern, vorzugsweise Glasfasern eingesetzt werden.

3. Membrangehäuseelement (2) gemäß einem der vorhergehenden Ansprüche, **dadurch gekennzeichnet, dass** das Innenelement (3) ein Innenliner oder ein inneres Hohlprofil ist, und bevorzugt der Innenliner extrudiert oder das innere Hohlprofil im Pultrusionsverfahren hergestellt ist.

4. Membrangehäuseelement (2) gemäß einem der vorhergehenden Ansprüche, **dadurch gekennzeichnet, dass** die Ummantelung (5) Hohlprofile (6) enthält, in denen die Zugelemente (7) gelagert sind.

5. Membrangehäuseelement (2) gemäß Anspruch 4, **dadurch gekennzeichnet, dass** die Hohlprofile (6) zur Aufnahme der Zugelemente oder die Zugelemente (7) selbst zwischen der mineralfaserverstärkten Schicht (4) und der Ummantelung (5) eingeschlossen sind.

6. Membrangehäuseelement (2) gemäß einem der vorhergehenden Ansprüche, **dadurch gekennzeichnet, dass** die Zugelemente (7) Zugstangen, bevorzugt aus Metall, oder Zugseile, bevorzugt aus Glas-, Kevlar- oder Kohlefasern, sind und/oder das Membrangehäuseelement (2) genau vier Zugelemente (7) enthält und/oder dass die Faserschicht (4) aus Glasfasern aufgebaut ist, bevorzugt aus thermoplasten-getränkten oder ungetränkten Glasfaserrovings besteht.

7. Membrangehäuseelement (2) gemäß einem der vorhergehenden Ansprüche, **dadurch gekennzeichnet, dass** der Innenliner (3) aus Polyethylen (PE), Polypropylen (PP), Polyvinylchlorid (PVC), Polyphenylenoxid (PPO), polyamidmodifiziertem Polyphenylenoxiden, einem polystyrolmodifizierten Polyphenylenoxid, ABS oder Polyvinylidenfluorid-Polymeren (PVDF) oder anderen Thermoplasten besteht.

8. Verfahren zur Herstellung eines zylindrischen Membrangehäuseelementes (2), das zumindest folgende Schritte umfasst:
1. Kontinuierliche Herstellung eines radial mit Fasern umwickelten Innenliners (3),
2. Auftrag einer Ummantelung (5), wobei die Ummantelung (5) mindestens zwei eingelagerte axiale Zugelemente (7) oder ein Ummantelungsprofil, in das nachträglich axiale Zugelemente (7) eingebracht werden können, aufweist.

9. Verfahren nach Anspruch 8, **dadurch gekennzeichnet, dass** während Schritt 1 folgende Vorgänge nacheinander ablaufen:
a. der Innenliner (3) durch Extrusion mittels einer Extrusionsstrecke hergestellt wird,
b. der Innenliner (3) abgekühlt wird,
c. die Oberfläche des Innenliners (3) so aufgeheizt wird, dass sie aufschmilzt und vorzugsweise gleichzeitig der Innenliner (3) radial mit Faser, vorzugsweise Glasfaserrovings oder Bändern flächendeckend umwickelt wird und sich mit dem Linermaterial verbindet und
d. anschließend unter die Erweichungstemperatur des Innenliners (3) abgekühlt wird.

10. Verfahren gemäß einem der Ansprüche 8 oder 9, **dadurch gekennzeichnet, dass** die mit Fasern umwickelten Innenliner (3) im kontinuierlichen Verfahren
e. mit einer weiteren Schicht aus Thermoplasten ummantelt werden, vorzugsweise mit ABS oder PP;
und/oder dass zwischen die faserverstärkte Schicht (4) und die Ummantelung (5) extrudierte Hohlprofile (6) zur Aufnahme der Zugelemente (7) eingebracht werden.

11. Verfahren gemäß einem der Ansprüche 8 bis 10, **dadurch gekennzeichnet, dass** ein Membrangehäuseelement (2) gemäß einem der Ansprüche 1 bis 7 hergestellt wird.

12. Verfahren gemäß einem der Ansprüche 8 bis 10, **dadurch gekennzeichnet, dass** die Ummantelung (5) oder das Ummantelungsprofil ebenfalls kontinuierlich extrudiert wird.

13. Sideport-Membrangehäuseelement, das aufgebaut ist aus einem Innenliner (3), der radial mit Fasern umwickelt ist und einer Spritzgussummantelung (5), wobei das Sideportelement (8) Öffnungen zur Aufnahme des Sideports (10) aufweist, die zur seitlichen Ab- oder Anströmung von Flüssigkeiten und zur Montage von Anschlussports dienen, **dadurch gekennzeichnet, dass**
-
- der Innenliner (3) ein Kunststoffelement ist, der radial mit Fasern umwickelt ist und
- zwischen Spritzgussummantelung (5) und Faserschicht (4) mindestens zwei Hohlprofile (6) zur Aufnahme von Zugelementen (7) eingebracht sind,
wobei bevorzugt die Faser Glasfaser ist und/oder der Innenliner (3) aus PE, PP, PVC, PPO, polyamidmodifiziertem Polyphenylenoxid, polystyrolmodifizierten Polyphenylenoxid, ABS, PVDF oder anderen Thermoplasten besteht.

14. Verfahren zur Herstellung eines Sideport-Membrangehäuseelementes gemäß Anspruch 13, **dadurch gekennzeichnet, dass** bei der Herstellung folgende Schritte ablaufen:
1. Fertigung des Innenliners (3) im Spritzgussverfahren,
2. radiale Umwicklung des Innenliners (3) mit einer Faser,
3. Fertigung einer Ummantelung (5) über der Faserschicht (4) im Spritzgussverfahren, wobei zusätzlich Öffnungen in den Innenliner (3) und die Ummantelung (5) eingebracht werden, die zur Ab- und Anströmung von Flüssigkeiten und zur Montage von Anschlussports dienen, und zwischen Spritzgussummantelung (5) und Faserschicht (4) mindestens zwei Hohlprofile (6) zur Aufnahme von Zugelementen (7) eingebracht sind.

15. Modulares Membrangehäuse (1), das aufgebaut ist aus
- mindestens einem Membrangehäuseelement (2) gemäß einem der Ansprüche 1 bis 7,
- mindestens zwei Membrangehäuseendköpfen/Flanschen (12) zur Befestigung der Zugelemente (7),
- mindestens zwei selbstdichtenden Endkappenassemblies und
- ggf. einem oder mehreren Sideportelementen und
- ggf. Anschlussfittingen für die seitliche Anströmung und Entnahme, Kugelhahnelementen oder Fittingen.

16. Verwendung eines Membrangehäuseelementes (2) gemäß einem der Ansprüche 1 bis 7 zum Aufbau eines Membrangehäuses (1) oder Behälters/Tanks für die Nanofiltration, Ultrafiltration, den Ionentausch oder die reverse Osmose.

## Claims

1. A cylindrical membrane housing element (2) constructed of an inner element (3), a fibre wrapping and a casing (5), **characterised in that**
- radial wrapping made of fibres is applied to the inner element (3) and
- the casing (5) is applied to the fibre layer (4), which casing contains at least two axial tension elements (7).

2. A membrane housing element (2) according to claim 1, **characterised in that** mineral fibres, textile fibres or plastics fibres, preferably glass fibres, are used as fibres for the fibre-reinforced layer.

3. A membrane housing element (2) according to any one of the preceding claims, **characterised in that** the inner element (3) is an inner liner or an inner hollow profile, and preferably the inner liner is extruded or the inner hollow profile is manufactured using pultrusion,

4. A membrane housing element (2) according to any one of the preceding claims, **characterised in that** the casing (5) contains hollow profiles (6) in which the tension elements (7) are mounted.

5. A membrane housing element (2) according to claim 4, **characterised in that** the hollow profiles (6) for receiving the tension elements or the tension elements (7) themselves are enclosed between the mineral-fibre-reinforced layer (4) and the casing (5).

6. A membrane housing element (2) according to any one of the preceding claims, **characterised in that** the tension elements (7) are tension rods, preferably of metal, or tension cables, preferably of glass fibres. Kevlar fibres or carbon fibres and/or the membrane housing element (2) contains exactly four tension elements (7), and/or **in that** the fibre layer (4) is constructed of glass fibres, preferably of thermoplastic-impregnated or non-impregnated glass-fibre rovings.

7. A membrane housing element (2) according to any one of the preceding claims, **characterised in that** the inner liner (3) is composed of polyethylene (PE), polypropylene (PP), polyvinyl chloride (PVC), polyphenylene oxide (PPO), polyamide-modified polyphenylene oxides, a polystyrene-modified polyphenylene oxide, ABS or polyvinylidene fluoride polymers (PVDF) or other thermoplastics.

8. A method of manufacturing a cylindrical membrane housing element (2), comprising at least the following steps:
1. continuous manufacture of an inner liner (3) with fibres wrapped radially therearound,
2. application of a casing (5), wherein the casing (5) has at least two embedded axial tension elements (7) or a casing profile into which axial tension elements (7) can be introduced subsequently.

9. A method according to claim 8, **characterised in that** the following operations proceed successively during step 1:
a. the inner liner (3) is manufactured by extrusion by means of an extruder line,
b. the inner liner (3) is cooled,
c. the surface of the inner liner (3) is heated in such a manner that it melts on and preferably at the same time the inner liner (3) is wrapped around radially by fibres, preferably bands or glass-fibre rovings, in a surface-covering manner and connects to the liner material and
d. is then cooled down below the softening point of the inner liner (3).

10. A method according to one of claims 8 and 9, **characterised in that** the inner liners (3) wrapped around by fibres are in a continuous process
e. encased with another layer of thermoplastics, preferably with ABS or PP; and/or **in that** extruded hollow profiles (6) to receive the tension elements (7) are introduced between the fibre-reinforced layer (4) and the casing (5).

11. A method according to any one of claims 8 to 10, **characterised in that** a membrane housing element (2) according to any one of claims 1 to 7 is manufactured.

12. A method according to any one of claims 8 to 10, **characterised in that** the casing (5) or the wrapping profile is likewise extruded continuously.

13. A sideport membrane housing element which is constructed of an inner liner (3) wrapped around radially by fibres and an injection moulded casing (5), wherein the sideport element (8) has openings to receive the sideport (10), which openings are used for lateral outflow or inflow of fluids and for mounting connection ports, **characterised in that**
- the inner liner (3) is a plastics element wrapped around radially by fibres and
- at least two hollow profiles (6) for receiving tension elements (7) are introduced between the injection moulded casing (5) and the fibre layer (4),
wherein preferably the fibre is glass fibre and/or the inner liner (3) is composed of PE, PP, PVC, PPO, polyamide-modified polyphenylene oxide, polystyrene-modified polyphenylene oxide, ABS, PVDF or other thermoplastics.

14. A method of manufacturing a sideport membrane housing element according to claim 13, **characterised in that** the following steps take place during manufacture:
1. production of the inner liner (3) using injection moulding,
2. radial wrapping of a fibre around the inner liner (3),
3. production of a casing (5) over the fibre layer (4) using injection moulding, wherein additionally openings are made in the inner liner (3) and the casing (5), which openings are used for outflow and inflow of fluids and for mounting connection ports, and at least two hollow profiles (6) for receiving tension elements (7) are introduced between the injection moulded casing (5) and the fibre layer (4).

15. A modular membrane housing (1) which is constructed of
- at least one membrane housing element (2) according to any one of claims 1 to 7,
- at least two membrane housing end heads/flanges (12) for securing the tension elements (7),
- at least two self-sealing end cap assemblies and
- optionally one or a plurality of sideport elements and
- optionally connection fittings for lateral inflow and removal, ball valve elements, or fittings.

16. Use of a membrane housing element (2) according to any one of claims 1 to 7 for the construction of a membrane housing (1) or receptacle/tank for nanofiltration, ultrafiltration, ion exchange or reverse osmosis.

## Revendications

1. Elément de boîtier à membrane (2) cylindrique, qui est constitué d'un élément intérieur (3), d'un enroulement de fibres et d'une gaine (5), **caractérisé en ce que**
- sur l'élément intérieur (3), est disposé un enroulement radial de fibres, et
- sur la couche de fibres (4), est disposée la gaine (5) qui renferme au moins deux éléments de traction (7) axiaux.

2. Elément de boîtier à membrane (2) selon la revendication 1, **caractérisé en ce que** les fibres utilisées pour la couche renforcée par des fibres sont des fibres minérales, des fibres textiles ou des fibres synthétiques, de préférence des fibres de verre.

3. Elément de boîtier à membrane (2) selon une des revendications précédentes, caractérisé en cc que l'élément intérieur (3) est un revêtement intérieur ou un profilé creux intérieur, et en ce que ledit revêtement intérieur est de préférence extrudé ou le profilé creux intérieur est fabriqué par un procédé de pultrusion.

4. Elément de boîtier à membrane (2) selon une des revendications précédentes, **caractérisé en ce que** la gaine (5) contient des profilés creux (6) dans lesquels sont placés les éléments de traction (7).

5. Elément de boîtier à membrane (2) selon la revendication 4, **caractérisé en ce que** les profilés creux (6) destinés à recevoir les éléments de traction, ou les éléments de traction (7) eux-mêmes, sont enfermés entre la couche (4) renforcée de fibres minérales et la gaine (5).

6. Elément de boîtier à membrane (2) selon une des revendications précédentes, **caractérisé en ce que** les éléments de traction (7) sont des tiges de traction, de préférence en métal, ou des câbles de traction, de préférence en fibres de verre, de kevlar ou de carbone, et/ou que l'élément de boîtier à membrane (2) comprend exactement quatre éléments de traction (7) et/ou que la couche de fibres (4) est constituée de fibres de verre, de préférence de stratifils de fibres de verre imprégnés de thermoplastique ou non imprégnés.

7. Elément de boîtier à membrane (2) selon une des revendications précédentes, **caractérisé en ce que** le revêtement intérieur (3) est constitué de polyéthylène (PE), de polypropylène (PP), de polychlorure de vinyle (PVC), d'oxyde de polyphénylène (PPO), d'oxydes de polyphénylène modifiés par un polyamide, d'un oxyde de polyphénylène modifié par un polystyrène, d'ABS ou de polymères de fluorure de vinylidène (PVDF) ou d'autres thermoplastiques.

8. Procédé de fabrication d'un élément de boîtier à membrane (2) qui comprend au moins les étapes suivantes :
1. fabrication en continu d'un revêtement intérieur (3) autour duquel des fibres sont enroulées radialement;
2. application d'une gaine (5), ladite gaine (5) présentant au moins deux éléments de traction (7) axiaux intégrés ou un profilé de gainage dans lequel on peut introduire ultérieurement des éléments de traction (7) axiaux.

9. Procédé selon la revendication 8, **caractérisé en ce que**, pendant l'étape 1, les processus suivants se déroulent :
a. le revêtement intérieur (3) est réalisé par extrusion, au moyen d'une ligne d'extrusion;
b. le revêtement intérieur (3) est refroidi;
c. la surface du revêtement intérieur (3) est chauffée de manière telle qu'elle entre en fusion et, de préférence, on enroule en même temps radialement autour du revêtement intérieur (3) des fibres, de préférence des stratifils de fibres de verre ou des bandes couvrant une grande surface, qui se lient à la matière du revêtement, et
d. est ensuite refroidie pour descendre en dessous de la température de ramollissement du revêtement intérieur (3).

10. Procédé selon une des revendications 8 ou 9, **caractérisé en ce que** les revêtements intérieurs (3), autour desquels sont enroulés des fibres, sont entourés, au cours d'un processus continu,
c. d'une couche supplémentaire de matière thermoplastique, de préférence d'ABS ou de PP;
et/ou que des profilés creux (6) extrudés, destinés à recevoir les éléments de traction (7), sont placés entre la couche (4) renforcée de fibres et la gaine (5).

11. Procédé selon une des revendications 8 à 10, **caractérisé en ce qu'**un élément de boîtier à membrane (2) est fabriqué conformément à l'une des revendications 1 à 7.

12. Procédé selon une des revendications 8 à 10, **caractérisé en ce que** la gaine (5) ou le profilé de gainage est également extrudé en continu.

13. Elément de boîtier à membrane à raccord latéral qui est constitué d'un revêtement intérieur (3), autour duquel des fibres sont enroulées radialement, et d'une gaine moulée par injection (5), l'élément à raccord latéral (8) présentant des ouvertures pour recevoir le raccord latéral (10), qui servent à l'arrivée ou à l'évacuation latérales de liquides et au montage de raccords de branchement, **caractérisé en ce que**
- le revêtement intérieur (3) est un élément en matière plastique, autour duquel des fibres sont enroulées radialement, et
- au moins deux profilés creux (6), destinés à recevoir des éléments de traction (7), sont placés entre la gaine moulée par injection (5) et la couche de fibres (4),
les fibres étant de préférence des fibres de verre et/ou le revêtement intérieur (3) étant constitué de PE, de PP, de PVC, de PPO, d'oxyde de polyphénylène modifiés par un polyamide, d'oxyde de polyphénylène modifié par un polystyrène, d'ABS, de PVDF ou d'autres thermoplastiques.

14. Procédé de fabrication d'un élément de boîtier à membrane à raccord latéral selon la revendication 13, **caractérisé en ce que** les étapes suivantes sont exécutées lors de la fabrication :
1. fabrication du revêtement intérieur (3) par moulage par injection,
2. enroulement radial d'une fibre autour du revêtement intérieur (3),
3. fabrication d'une gaine (5) sur la couche de fibres (4), par moulage par injection, en réalisant en outre des ouvertures dans le revêtement intérieur (3) et la gaine (5), ouvertures qui servent à l'arrivée et à l'évacuation de liquides et au montage de raccords de branchement, et au moins deux profilés creux (6), destinés à recevoir des éléments de traction (7), étant placés entre la gaine moulée par injection (5) et la couche de fibres (4).

15. Boîtier à membrane (1) modulaire, qui est constitué
- d'au moins un élément de boîtier à membrane (2) selon une des revendications 1 à 7,
- d'au moins deux têtes d'extrémité de boîtier à membrane/brides (12) pour fixer les éléments de traction (7),
- d'au moins deux ensembles de capuchons d'extrémité auto-étanches, et
- le cas échéant, d'un ou plusieurs éléments à raccord latéral, et
- le cas échéant, de raccords de branchement pour l'arrivée et le prélèvement latéraux, d'éléments de robinets à boisseau sphérique ou de garnitures.

16. Utilisation d'un élément de boîtier à membrane (2) selon une des revendications 1 à 7 pour constituer un boîtier à membrane (1) ou un récipient/réservoir à des fins de nanofiltration, d'ultrafiltration, d'échange d'ions ou d'osmose inverse.
